# EUROPÄISCHE PATENTANMELDUNG

(11) **EP 2 645 327 A1**
(43) Veröffentlichungstag der Anmeldung: **02.10.2013**
(21) Anmeldenummer: 12161350.9
(22) Anmeldetag: 26.03.2012
(51) Int. Cl.: G06Q 50/26

(54) **Verfahren zur Erfassung und Ausstellung von Ordnungswidrigkeiten und Regelverstößen**

(71) Anmelder: Schweers Informationstechnologie GmbH, 40670 Meerbusch (DE)
(72) Erfinder: Schweers, Michael, 40670 Meerbusch (DE)
(74) Vertreter: DR. STARK & PARTNER

(57) **Zusammenfassung**

Verfahren zur Erfassung und Ausstellung von Ordnungswidrigkeiten und Regelverstößen, wobei deren Erfassung mittels eines Handcomputers erfolgt, wobei die Ordnungswidrigkeit bzw. der Regelverstoß durch eine Kontrollperson festgestellt und von ihm in den Handcomputer eingegeben wird und eine gedruckte Benachrichtigung, betreffend die Ordnungswidrigkeit bzw. den Regelverstoß ausgehändigt bzw. hinterlassen wird.

Um auf einfache und kostengünstige Weise eine Benachrichtigung über einen detaillierten Tatvorwurf für den Empfänger der Ordnungswidrigkeit verfügbar zu machen, soll die Benachrichtigung mit einer vorgefertigten eindeutigen Identifizierung versehen sein und die Kontrollperson eine Verknüpfung der von ihr in den Handcomputer eingegebenen Ordnungswidrigkeit mit der Identifizierung erstellt und anschließend die erfasste und mit der Identifizierung verknüpfte Ordnungswidrigkeit in Echtzeit von dem Handcomputer aus über ein Kommunikationsnetz in eine zentrale Datenstelle einspeist, aus der die Ordnungswidrigkeit über ein Kommunikationsnetz anhand der Identifikation, beispielsweise von einem Besitzer des Gegenstandes bzw. Benutzer des Fahrzeuges, auslesbar ist.

## Beschreibung

Die Erfindung betrifft ein Verfahren zur Erfassung und Ausstellung von Ordnungswidrigkeiten und Regelverstößen, insbesondere von abgestellten Gegenständen, wie z. B. Fahrzeugen, Mülltonnen oder dergleichen, wobei die Erfassung einer Ordnungswidrigkeit und Regelverstoßes mittels eines Handcomputers erfolgt, wobei die Ordnungswidrigkeit bzw. der Regelverstoß durch eine Kontrollperson festgestellt und von ihr in den Handcomputer eingegeben wird und eine gedruckte Benachrichtigung, beispielsweise in Form einer bedruckten Karte, eines bedruckten Zettels oder eines bedruckten Aufklebers betreffend die Ordnungswidrigkeit bzw. den Regelverstoß ausgehändigt bzw. hinterlassen wird.

Die Erfindung betrifft weiterhin ein System zur Erfassung und Ausstellung von Ordnungswidrigkeiten und Regelverstößen, insbesondere von abgestellten Gegenständen, wie z. B. Fahrzeugen, Mülltonnen oder dergleichen, wobei das System einen Handcomputer zur Erfassung einer Ordnungswidrigkeit bzw. eines Regelverstoßes sowie pro Ordnungswidrigkeit bzw. Regelverstoß eine gedruckte Benachrichtigung, beispielsweise in Form einer bedruckten Karte, eines bedruckten Zettels oder eines bedruckten Aufklebers, die an dem Gegenstand anbringbar ist, umfasst. Dieses System kann insbesondere zur Durchführung des erfindungsgemäßen Verfahrens dienen.

Aus der Praxis ist bekannt, mobile Datenerfassungssysteme in Form von Handcomputern zur Erfassung von Ordnungswidrigkeiten zu nutzen. Hierzu stehen verschiedenste Geräte zur Verfügung, mit denen Daten einer Ordnungswidrigkeit bzw. eines Regelverstoßes vor Ort manuell oder elektronisch erfasst werden können. Anschließend werden die Daten in dem Handcomputer gespeichert und der Tatvorwurf wird mittels einer ausgedruckten Benachrichtigung ausgehändigt bzw. an einem Gegenstand, wie z. B. einem Fahrzeug hinterlassen.

Die Hinterlassung des konkreten Tatvorwurfs ist in den meisten Ländern rechtlich vorgeschrieben. In Deutschland besteht darüber hinaus die Möglichkeit, anstelle eines konkreten Tatvorwurfs lediglich einen Hinweis auf eine nicht näher spezifizierte Ordnungswidrigkeit bzw. einen nicht näher spezifizierten Regelverstoß zu hinterlassen bzw. zu übergeben.

Der Hinweis besagt in solchen Fällen, dass eine Ordnungswidrigkeit im Rahmen eines automatisierten Verfahrens festgestellt wurde und in Kürze ein entsprechender Bescheid der zuständigen Behörde ergehen wird.

Nachteilig hierbei ist, dass zum Hinterlassen der Benachrichtigung über den Tatvorwurf ein mobiler Drucker benötigt wird. Dies bedeutet zusätzliches Gewicht für die Kontrollperson, hohe Aufwendung durch Spezialpapier, welches zumeist vorbedruckt und damit besonders kostspielig ist. Häufig erfolgt der Ausdruck zudem auf einem Kunststoffmaterial mit Thermobeschichtung, was nicht umweltfreundlich ist. Zudem sind mobile Drucker teuer in der Anschaffung und im Unterhalt und außerdem häufig anfällig für technische Defekte.

Aufgabe der Erfindung ist es, die vorgenannten Nachteile zu vermeiden und ein gattungsgemäßes Verfahren sowie ein gattungsgemäßes System anzugeben, mittels dessen auf einfache und kostengünstige Weise eine Benachrichtigung über einen detaillierten Tatvorwurf für den Empfänger der Ordnungswidrigkeit verfügbar zu machen.

Diese Aufgabe wird dadurch gelöst, dass die Benachrichtigung mit einer vorgefertigten, insbesondere vorgedruckten, eindeutigen Identifizierung versehen ist und die Kontrollperson eine Verknüpfung der von ihr in den Handcomputer eingegebenen Ordnungswidrigkeit mit der Identifizierung erstellt und anschließend die erfasste und mit der Identifizierung verknüpfte Ordnungswidrigkeit in Echtzeit von dem Handcomputer aus über ein Kommunikationsnetz in eine zentrale Datenstelle einspeist, aus der die Ordnungswidrigkeit über ein Kommunikationsnetz anhand der Identifikation, beispielsweise von einem Besitzer des Gegenstandes bzw. Benutzer des Fahrzeuges, auslesbar ist. Somit kann mittels eines geeigneten Zugriffsgeräts, beispielsweise eines Computers mit Internetzugang, leicht der detaillierte Tatvorwurf über die Ordnungswidrigkeit eingesehen werden.

Vorzugsweise können verschiedene Vorlagen für unterschiedliche Ordnungswidrigkeiten bzw. Regelverstöße im Handcomputer hinterlegt sein und entsprechend der konkreten Situation durch die Kontrollperson in dem Handcomputer ausgewählt und mit einer der vorgefertigten, insbesondere vorgedruckten, eindeutigen Identifizierungen verknüpft werden, so dass beispielsweise vorgefertigte und mit verschiedenen eindeutigen Identifizierungen versehene Karten mitgeführt und vor Ort mit der erfassten Ordnungswidrigkeit bzw. dem erfassten Regelverstoß verknüpft werden.

Erfindungsgemäß kann das Verknüpfen einer Ordnungswidrigkeit bzw. eines Regelverstoßes mit einer Identifizierung im Handcomputer manuell und/oder durch elektronisches Auslesen erfolgen. So kann beispielsweise eine als Identifizierung vorgesehene Codierung, insbesondere in Form eines Barcodes oder QR-Codes oder aber eines RFID-Transponders, auf der Benachrichtigung vorgesehen sein.

Bei einem bevorzugten Ausführungsbeispiel der Erfindung kann das Einspeisen der erfassten Ordnungswidrigkeit bzw. des erfassten Regelverstoßes von dem Handcomputer aus über ein Kommunikationsnetz in eine zentrale Datenstelle automatisch nach erfolgter Verknüpfung mit einer Identifizierung erfolgen, so dass keine weitere diesbezügliche Tätigkeit der Kontrollperson erforderlich ist und das Einspeisen auch nicht vergessen werden kann.

Erfindungsgemäß kann das Drucken der Benachrichtigung durch die Kontrollperson vor Ort nach erfolgter Verknüpfung einer Ordnungswidrigkeit bzw. eines Regelverstoßes mit einer Identifizierung im Handcomputer erfolgen.

Auch kann das Drucken der Benachrichtigung durch die Kontrollperson bereits vor der Erfassung einer Ordnungswidrigkeit bzw. eines Regelverstoßes erfolgt sein und die Kontrollperson kann eine Anzahl an Benachrichtigungen, die jeweils mit unterschiedlichen Identifizierungen versehen sind, mit sich führen. Somit werden die eingangs beschriebenen Nachteile eines mobilen Druckers vermieden.

Die der Erfindung zugrunde liegende Aufgabe wird auch dadurch gelöst, dass ein gattungsgemäßes System weiterhin ein Kommunikationsnetz umfasst und die Benachrichtigung mit einer vorgefertigten, insbesondere vorgedruckten, eindeutigen Identifizierung versehen ist, und dass der Handcomputer eine Eingabeeinrichtung aufweist, mittels der eine Kontrollperson eine Verknüpfung der von ihr mit dem Handcomputer erfassten Ordnungswidrigkeit bzw. des erfassten Regelverstoßes mit der Identifizierung erstellt, und dass der Handcomputer weiterhin eine Sendeeinrichtung für eine Einspeisung der erfassten und mit der Identifizierung verknüpften Ordnungswidrigkeit bzw. Regelverstoßes in Echtzeit über ein Kommunikationsnetz in eine zentrale Datenstelle umfasst, aus der die Ordnungswidrigkeit über ein Kommunikationsnetz anhand der Identifikation, beispielsweise von einem Besitzer des Gegenstandes bzw. Benutzer des Fahrzeuges, auslesbar ist.

Erfindungsgemäß kann der Handcomputer mit verschiedenen Vorlagen für unterschiedliche die Ordnungswidrigkeiten bzw. Regelverstöße im Handcomputer versehen sein, aus denen entsprechend der konkreten Situation die passende Vorlage von der Kontrollperson auswählbar und mit einer der vorgefertigten, insbesondere vorgedruckten, eindeutigen Identifizierungen verknüpfbar ist.

Vorteilhafterweise kann der Handcomputer mit einer Eingabevorrichtung für das Verknüpfen einer Ordnungswidrigkeit bzw. eines Regelverstoßes mit einer Identifizierung im Handcomputer und/oder mit einer Lesevorrichtung für ein elektronisches Auslesen der Identifizierung, die insbesondere in Form eines Barcodes oder QR-Codes oder aber als RFID-Transponders vorgesehen sein kann, versehen sein.

Bei einem bevorzugten Ausführungsbeispiel der Erfindung kann der Handcomputer derart gesteuert sein, dass das Einspeisen der erfassten Ordnungswidrigkeit bzw. des erfassten Regelverstoßes von dem Handcomputer aus über ein Kommunikationsnetz in eine zentrale Datenstelle automatisch nach erfolgter Verknüpfung mit einer Identifizierung erfolgt.

Vorteilhafterweise kann das System weiterhin einen mobilen, insbesondere in den Handcomputer integrierten, Drucker zum Drucken der Benachrichtigung durch die Kontrollperson vor Ort nach erfolgter Verknüpfung einer Ordnungswidrigkeit bzw. eines Regelverstoßes mit einer Identifizierung, insbesondere in Form eines Barcodes oder QR-Codes, umfassen.

Auch können die Benachrichtigungen als bereits vor der Erfassung einer Ordnungswidrigkeit bzw. eines Regelverstoßes vorgedruckte und mit jeweils unterschiedlichen Identifizierungen, insbesondere in Form eines Barcodes oder QR-Codes oder aber als RFID-Transponders, versehene Benachrichtigungen ausgebildet sein. Somit werden die eingangs beschriebenen Nachteile eines mobilen Druckers vermieden.

## Patentansprüche

1. Verfahren zur Erfassung und Ausstellung von Ordnungswidrigkeiten und Regelverstößen, insbesondere von abgestellten Gegenständen, wie z. B. Fahrzeugen, Mülltonnen oder dergleichen, wobei die Erfassung einer Ordnungswidrigkeit und eines Regelverstoßes mittels eines Handcomputers erfolgt, wobei die Ordnungswidrigkeit bzw. der Regelverstoß durch eine Kontrollperson festgestellt und von ihr in den Handcomputer eingegeben wird und eine gedruckte Benachrichtigung, beispielsweise in Form einer bedruckten Karte, eines bedruckten Zettels oder eines bedruckten Aufklebers, betreffend die Ordnungswidrigkeit bzw. den Regelverstoß ausgehändigt bzw. hinterlassen wird, **dadurch gekennzeichnet, dass** die Benachrichtigung mit einer vorgefertigten, insbesondere vorgedruckten, eindeutigen Identifizierung versehen ist und die Kontrollperson eine Verknüpfung der von ihr in den Handcomputer eingegebenen Ordnungswidrigkeit mit der Identifizierung erstellt und anschließend die erfasste und mit der Identifizierung verknüpfte Ordnungswidrigkeit in Echtzeit von dem Handcomputer aus über ein Kommunikationsnetz in eine zentrale Datenstelle einspeist, aus der die Ordnungswidrigkeit über ein Kommunikationsnetz anhand der Identifikation, beispielsweise von einem Besitzer des Gegenstandes bzw. Benutzer des Fahrzeuges, auslesbar ist.

2. Verfahren nach dem vorhergehenden Anspruch, **dadurch gekennzeichnet, dass** verschiedene Vorlagen für unterschiedliche Ordnungswidrigkeiten bzw. Regelverstöße im Handcomputer hinterlegt sind und entsprechend der konkreten Situation durch die Kontrollperson in dem Handcomputer ausgewählt und mit einer der vorgefertigten, insbesondere vorgedruckten, eindeutigen Identifizierungen verknüpft wird.

3. Verfahren nach einem der vorhergehenden Ansprüche, **dadurch gekennzeichnet, dass** das Verknüpfen einer Ordnungswidrigkeit bzw. eines Regelverstoßes mit einer Identifizierung im Handcomputer manuell und/oder durch elektronisches Auslesen erfolgt.

4. Verfahren nach einem der vorhergehenden Ansprüche, **dadurch gekennzeichnet, dass** das Einspeisen der erfassten Ordnungswidrigkeit bzw. des erfassten Regelverstoßes von dem Handcomputer aus über ein Kommunikationsnetz in eine zentrale Datenstelle automatisch nach erfolgter Verknüpfung mit einer Identifizierung erfolgt.

5. Verfahren nach einem der vorhergehenden Ansprüche, **dadurch gekennzeichnet, dass** das Drucken der Benachrichtigung durch die Kontrollperson vor Ort nach erfolgter Verknüpfung einer Ordnungswidrigkeit bzw. eines Regelverstoßes mit einer Identifizierung im Handcomputer erfolgt.

6. Verfahren nach einem der Ansprüche 1 bis 4, **dadurch gekennzeichnet, dass** das Drucken der Benachrichtigung durch die Kontrollperson bereits vor der Erfassung einer Ordnungswidrigkeit bzw. eines Regelverstoßes erfolgt ist und die Kontrollperson eine Anzahl an Benachrichtigungen, die jeweils mit unterschiedlichen Identifizierungen versehen sind, mit sich führt.

7. System zur Erfassung und Ausstellung von Ordnungswidrigkeiten und Regelverstößen, insbesondere von abgestellten Gegenständen, wie z. B. Fahrzeugen, Mülltonnen oder dergleichen, wobei das System einen Handcomputer zur Erfassung einer Ordnungswidrigkeit bzw. eines Regelverstoßes sowie pro Ordnungswidrigkeit bzw. Regelverstoß eine gedruckte Benachrichtigung, beispielsweise in Form einer bedruckten Karte, eines bedruckten Zettels oder eines bedruckten Aufklebers, die an dem Gegenstand anbringbar ist, betreffend die Ordnungswidrigkeit bzw. den Regelverstoß umfasst, insbesondere zur Durchführung des Verfahrens nach einem der vorhergehenden Ansprüche, **dadurch gekennzeichnet, dass** das System weiterhin ein Kommunikationsnetz umfasst und die Benachrichtigung mit einer vorgefertigten, insbesondere vorgedruckten, eindeutigen Identifizierung versehen ist, und dass der Handcomputer eine Eingabeeinrichtung aufweist, mittels der eine Kontrollperson eine Verknüpfung der von ihr mit dem Handcomputer erfassten Ordnungswidrigkeit bzw. den erfassten Regelverstoß mit der Identifizierung erstellt, und dass der Handcomputer weiterhin eine Sendeeinrichtung für eine Einspeisung der erfassten und mit der Identifizierung verknüpften Ordnungswidrigkeit bzw. des erfassten Regelverstoßes in Echtzeit über ein Kommunikationsnetz in eine zentrale Datenstelle umfasst, aus der die Ordnungswidrigkeit bzw. der Regelverstoß über ein Kommunikationsnetz anhand der Identifikation, beispielsweise von einem Besitzer des Gegenstandes bzw. Benutzer des Fahrzeuges, auslesbar ist.

8. System nach dem vorhergehenden Anspruch, **dadurch gekennzeichnet, dass** der Handcomputer mit verschiedenen Vorlagen für unterschiedliche die Ordnungswidrigkeiten bzw. Regelverstöße im Handcomputer versehen ist, aus denen entsprechend der konkreten Situation die passende Vorlage von der Kontrollperson auswählbar und mit einer der vorgefertigten, insbesondere vorgedruckten, eindeutigen Identifizierungen verknüpfbar ist.

9. System nach einem der Ansprüche 7 oder 8, **dadurch gekennzeichnet, dass** der Handcomputer mit einer Eingabevorrichtung für das Verknüpfen einer Ordnungswidrigkeit bzw. eines Regelverstoßes mit einer Identifizierung im Handcomputer und/oder mit einer Lesevorrichtung für ein elektronisches Auslesen der Identifizierung versehen ist.

10. System nach einem der Ansprüche 7 bis 9, **dadurch gekennzeichnet, dass** der Handcomputer derart gesteuert ist, dass das Einspeisen der erfassten Ordnungswidrigkeit bzw. des erfassten Regelverstoßes von dem Handcomputer aus über ein Kommunikationsnetz in eine zentrale Datenstelle automatisch nach erfolgter Verknüpfung mit einer Identifizierung erfolgt.

11. System nach einem der Ansprüche 7 bis 10, **dadurch gekennzeichnet, dass** das System weiterhin einen mobilen, insbesondere in den Handcomputer integrierten, Drucker zum Drucken der Benachrichtigung durch die Kontrollperson vor Ort nach erfolgter Verknüpfung einer Ordnungswidrigkeit bzw. eines Regelverstoßes mit einer Identifizierung, insbesondere in Form eines Barcodes oder QR-Codes, umfasst.

12. System nach einem der Ansprüche 7 bis 10, **dadurch gekennzeichnet, dass** die Benachrichtigungen als bereits vor der Erfassung einer Ordnungswidrigkeit bzw. eines Regelverstoßes vorgedruckte und mit jeweils unterschiedlichen Identifizierungen, insbesondere in Form eines Barcodes oder QR-Codes oder aber als RFID-Transponders, versehene Benachrichtigungen ausgebildet sind.
